# FASCICULE DE BREVET EUROPEEN

(11) **EP 3 492 246 B1**
(45) Date de publication et mention de la délivrance du brevet: **19.08.2020**
(21) Numéro de dépôt: 18209381.5
(22) Date de dépôt: 30.11.2018
(51) Int. Cl.: B29C 65/10, B29C 65/56, F28F 9/16, F28F 21/06, B29C 65/00, F28D 7/16, F28D 21/00, F28F 9/04, F28F 9/14, B29C 57/02

(54) **DISPOSITIF COMPORTANT UN ÉLÉMENT D'OBTURATION POUR FIXER UN TUBE SUR UNE PLAQUE TUBULAIRE D'UN ÉCHANGEUR DE CHALEUR**
VERSCHLUSSELEMENT UMFASSENDE BEFESTIGUNGSVORRICHTUNG EINER LEITUNG AUF EINEM ROHRBODEN EINES WÄRMETAUSCHERS
DEVICE COMPRISING A PLUGGING ELEMENT FOR ATTACHING A TUBE TO A TUBULAR PLATE OF A HEAT EXCHANGER

(30) Priorité: 01.12.2017 FR 1761511
(43) Date de publication de la demande: 05.06.2019
(73) Titulaire: Commissariat à l'énergie atomique et aux énergies alternatives, 75015 Paris (FR)
(72) Inventeur: BANDELIER, Philippe, 38240 Meylan (FR); MAISSE, Amélie, 38500 Voiron (FR)
(74) Mandataire: Brevalex

(56) Documents cités:
- EP-A2- 2 065 167
- FR-A1- 2 577 008

## Description

### DOMAINE TECHNIQUE

La présente invention se rapporte au domaine général des échangeurs de chaleur à tubes et calandre, comprenant notamment des tubes minces souples en matière plastique, et plus particulièrement aux évapo-condenseurs, notamment en matériaux polymères, utilisés pour concentrer des solutions par évapo-concentration en évaporant une fraction de solvant dans un évaporateur par exemple à film tombant, en particulier pour le dessalement d'eau de mer ou pour la concentration d'effluents liquides, et également aux échangeurs de chaleur gaz/gaz, notamment en matériaux polymères, permettant de récupérer, par exemple, de la chaleur sur des rejets gazeux.

L'invention est tout particulièrement concernée par la réalisation d'un bourrelet sécurisant l'assemblage d'un tube mince avec ses pièces de fixation.

L'invention propose ainsi un dispositif de fixation d'un tube sur une plaque tubulaire d'un échangeur de chaleur comportant un élément d'obturation, ainsi qu'un procédé associé de formation d'un bourrelet sur le tube.

### ÉTAT DE LA TECHNIQUE ANTÉRIEURE

Dans le cadre d'un échangeur de chaleur à tubes et calandre, une technologie utilisable est basée sur l'emploi de tubes verticaux très minces, à savoir d'une épaisseur comprise entre 40 et 200 µm, en matériaux polymères. Ces tubes sont donc également très souples.

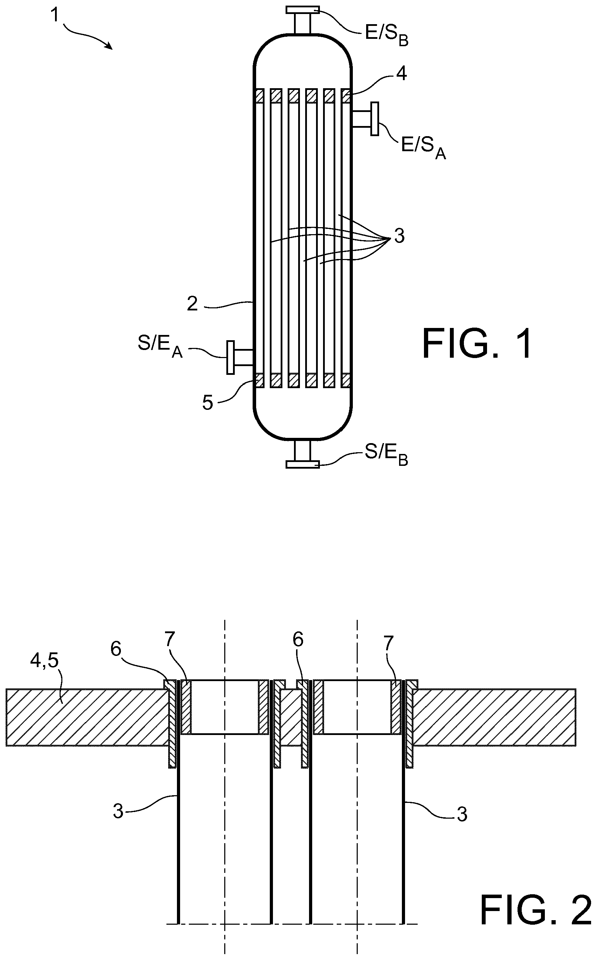

La figure 1 illustre schématiquement, en coupe, un exemple d'échangeur de chaleur 1 à tubes et calandre comprenant une calandre 2 dans laquelle sont disposés des tubes minces 3 entre deux plaques tubulaires supérieure 4 et inférieure 5. L'échangeur de chaleur est traversé par des fluides A et B.

L'un des fluides, ici le fluide B, liquide ou gaz, circule à l'extérieur des tubes 3. Sur la figure 1, les références E/S_{B} et S/E_{B} désignent respectivement les entrée/sortie du fluide B et sortie/entrée du fluide B.

L'autre fluide, ici le fluide A, vapeur ou gaz, circule à l'intérieur des tubes 3. Sur la figure 1, les références E/S_{A} et S/E_{A} désignent respectivement les entrée/sortie du fluide A et sortie/entrée du fluide A. De plus, afin de pouvoir constituer l'échangeur de chaleur 1, les tubes 3 sont associés à des plaques tubulaires supérieure 4 et inférieure 5 séparant les fluides.

L'une des principales difficultés lors de l'utilisation de tubes souples 3 est de pouvoir raccorder ces tubes 3 avec les deux plaques tubulaires 4, 5 et ce de manière étanche en assurant le cas échéant d'autres fonctions supplémentaires propres à l'application concernée. A cet effet, des pièces de fixation, de préférence réalisées aussi en matériaux polymères, permettent d'assurer la jonction entre les tubes 3 et les plaques 4,5.

La figure 2 illustre un exemple de principe de jonction entre des tubes minces 3 et une plaque tubulaire 4, 5. Ce principe est notamment décrit dans la demande de brevet français FR 2 542 437 A1 de la Demanderesse.

Ainsi, pour ce qui est de la stricte fonction de tenue des tubes 3, le principe général des pièces de fixation est de pincer les tubes 3 entre deux pièces coniques femelle 6 et mâle 7. La pièce conique femelle 6 est enchâssée dans la plaque tubulaire 4, 5. La traction du tube 3 renforce le serrage de la face externe de la pièce conique mâle 7 contre la face interne de la pièce conique femelle 6, ce qui provoque un effet autobloquant.

Néanmoins, ce principe n'est pas entièrement satisfaisant. En effet, par le jeu des cyclages thermiques combinés avec les dilatations différentielles des matériaux durant les transitoires, il a été constaté que l'effort de serrage peut en réalité se relâcher et le tube mince 3 arrive à glisser entre les deux pièces coniques 6 et 7 si bien qu'il finit par tomber. Ce phénomène est d'autant plus critique si on considère la fixation inférieure du tube 3 dans le cas où elle est identique à la fixation supérieure, ce qui est le cas des échangeurs de chaleur gaz/gaz. Dans ce dernier cas, l'ensemble de la fixation étant inversé, la pièce conique mâle 7 desserrée finit par tomber sous l'effet de son propre poids et plus rien ne retient le tube 3, ni n'assure l'étanchéité.

Aussi, afin de remédier aux problèmes exposés précédemment, la réalisation d'un bourrelet aux extrémités du tube 3 pour l'empêcher de glisser entre les deux pièces coniques 6 et 7 a été envisagée, comme par exemple décrit dans les demandes de brevet français FR 2 577 007 A1 et FR 2 577 008 A2 de la Demanderesse.

Plus précisément, la demande de brevet français FR 2 577 008 A1 expose différents moyens de réaliser ce bourrelet. Les différents procédés décrits combinent avec un même outil le montage des tubes, le dispositif permettant d'ajuster les deux pièces coniques sur le tube en laissant dépasser une longueur de tube adéquat entre les deux pièces coniques une fois mis en place, et enfin de réaliser le bourrelet par fusion du polymère.

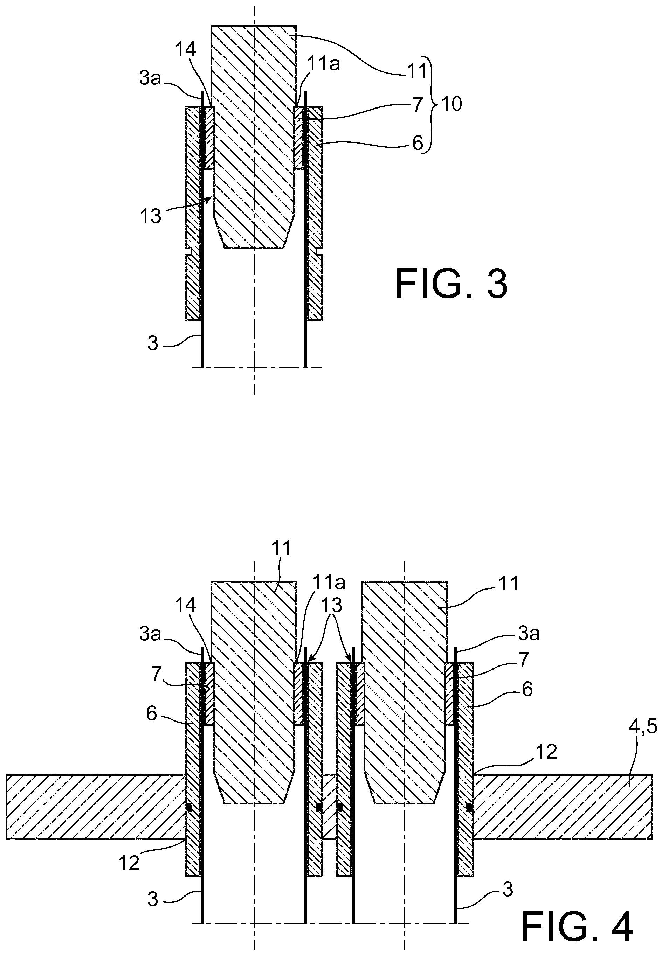

Trois méthodes de réalisation du bourrelet sont plus particulièrement décrites : l'utilisation d'un anneau rayonnant (en figure 2) qui vient au plus près de la matière afin de provoquer la fusion du polymère, combiné avec un réflecteur en face arrière ; l'utilisation de biseaux chauffants (en figure 3) qui viennent, par contact mécanique, replier la sur-longueur de gaine et la fondre; l'utilisation d'un méplat chauffant (en figure 4) qui vient écraser la sur-longueur de tube et la fondre, un obturateur masquant la sur-longueur pendant la mise en chauffe et s'effaçant le temps de la fusion afin de maîtriser le temps de fonte. Toutes ces méthodes sont appliquées sur un ensemble tube et fixations en cours de montage à l'aide d'un outil dédié visible sur la figure 2 de FR 2 577 008 A1.

Tous les principes exposés précédemment reposent sur un mode de fusion soit par contact avec une surface chaude, soit par une surface rayonnante portée à haute température. Or, il est à noter que tout système qui requiert un contact physique entre la sur-longueur de tube et la partie chauffante est inopérant du fait que la matière colle sur l'élément chauffant et de ce fait s'arrache lors du retrait du dispositif de chauffage. La dimension de l'élément chauffant étant nécessairement millimétrique, il ne présente aucune inertie thermique, ce qui exclut toute maîtrise de la température. De plus, il n'y a aucun contrôle de la longueur sur laquelle la fusion s'opère puisque la partie femelle de l'assemblage n'est pas en position finale.

Le dispositif représenté sur la figure 3 de FR 2 577 008 A1 comporte des demi-mâchoires chauffantes escamotables qui repoussent l'extrémité du tube vers l'intérieur tout en le fondant. De cette manière, il est impossible de repousser la matière sur toute la périphérie du tube puisque le mouvement ne s'effectue que selon deux sens d'une même direction et non pas selon une symétrie de révolution.

Par ailleurs, un dispositif rayonnant ne permet pas de maîtriser l'orientation du bourrelet. Il ne présente également aucune inertie thermique. La maîtrise de la température de fusion sans dégradation des pièces avoisinantes est critique.

### EXPOSÉ DE L'INVENTION

Il existe ainsi un besoin pour proposer encore une solution améliorée de réalisation d'un bourrelet aux extrémités d'un tube mince d'un échangeur de chaleur à tubes et calandre de sorte à sécuriser l'assemblage du tube mince avec ses pièces de fixation.

L'invention a pour but de remédier au moins partiellement aux besoins mentionnés précédemment et aux inconvénients relatifs aux réalisations de l'art antérieur.

L'invention a pour objet, selon l'un de ses aspects, un dispositif de fixation d'un tube sur une plaque tubulaire d'un échangeur de chaleur selon la revendication 1.

Au lieu d'utiliser un principe de fusion par contact avec une paroi chaude ou par rayonnement comme selon l'art antérieur, l'invention utilise un soufflage de gaz chaud, notamment de l'air chaud.

Grâce à l'invention, il peut donc être possible d'éviter tout contact entre la matière du tube et un outillage quelconque réalisant la fusion. De plus, l'invention facilite la fusion de la matière du tube mince, son extrémité libre, dépassant volontairement de l'assemblage des deux pièces de fixation mâle et femelle en position finale. En outre, l'invention peut permettre une orientation de la matière fondue du tube de manière à la rabattre selon une direction maîtrisée. Par ailleurs, l'invention permet le respect de l'intégrité des pièces de fixation et du tube en dehors de la zone de fusion.

Le dispositif selon l'invention peut en outre comporter l'une ou plusieurs des caractéristiques suivantes prises isolément ou suivant toutes combinaisons techniques possibles.

De façon préférentielle, le tube est un tube mince. Son épaisseur est par exemple comprise entre 40 et 200 µm.

De façon avantageuse, la présence de l'élément d'obturation permet d'éviter au courant gazeux chaud de pénétrer à l'intérieur du tube, ce qui aurait pour effet de détruire le tube par fusion ou par déformation (effet thermo-rétractable) compte-tenu de sa très faible épaisseur et de son procédé de fabrication habituel.

L'élément d'obturation peut comporter un épaulement apte à venir en appui contre la pièce de fixation mâle.

Par ailleurs, le ou les matériaux constitutifs de l'élément d'obturation peuvent présenter une température de fusion plus élevée que la température de fusion du ou des matériaux constitutifs du tube. En effet, le ou les matériaux de l'élément d'obturation sont préférentiellement choisis afin de présenter une bonne résistance à la température afin de ne pas fondre également lorsque l'extrémité libre du tube fond pour former le bourrelet. Ils présentent de plus préférentiellement une forte inertie thermique pour ne pas transmettre la chaleur vers les zones non concernées par l'opération de formation du bourrelet.

De façon préférentielle, l'élément d'obturation peut comporter un polymère fluoré, notamment du polytétrafluoroéthylène (PTFE).

En outre, l'élément d'obturation peut comporter un évidement, notamment en forme de V, sur sa surface extérieure en dehors du tube.

L'élément d'obturation peut encore avantageusement comporter une extrémité d'insertion dans le tube de forme tronconique de sorte à faciliter la mise en place de cet élément d'obturation.

De plus, l'élément d'obturation est, selon l'invention, partiellement creux, comportant ainsi un orifice d'injection de gaz chaud, et comportant au moins un orifice périphérique, ou lumière périphérique, permettant le passage de gaz chaud pour venir directement au contact de l'extrémité libre du tube.

De façon avantageuse, le passage du gaz chaud au travers de l'orifice d'injection, puis au travers d'un ou plusieurs orifices périphériques, permet de faire fondre la matière de l'extrémité libre du tube et de former le bourrelet qui est repoussé vers l'extérieur sous l'effet de la vitesse du gaz chaud.

En outre, ledit au moins un orifice périphérique peut comporter :
- une première portion s'étendant sensiblement perpendiculairement à l'axe longitudinal du tube,
- une deuxième portion s'étendant sensiblement parallèlement à l'axe longitudinal du tube dans laquelle s'étend l'extrémité libre du tube à chauffer pour former le bourrelet,
- une troisième portion s'étendant sensiblement perpendiculairement à l'axe longitudinal du tube, et
- une quatrième portion s'étendant sensiblement parallèlement à l'axe longitudinal du tube.

De façon avantageuse, l'orientation de la deuxième portion permet de pouvoir repousser la matière de l'extrémité libre du tube dans le sens axial, autrement dit selon l'axe longitudinal du tube. Cette orientation permet avantageusement de repousser la matière contre l'assemblage des pièces de fixation mâle et femelle, ce qui présente l'avantage de bloquer l'expulsion de la pièce de fixation mâle vers l'extérieur et aussi de supprimer le risque d'amincissement du tube lorsqu'il est repoussé vers l'extérieur.

Par ailleurs, l'orientation de la quatrième portion permet avantageusement de diriger le gaz chaud vers l'extérieur selon une direction verticale, à savoir selon l'axe longitudinal du tube, afin de ne pas perturber les tubes adjacents.

En outre, l'élément d'obturation peut comporter, dans sa portion creuse, un obturateur mobile, notamment un obturateur coulissant, entre une position dite « ouverte » permettant le passage de gaz chaud dans l'élément d'obturation vers ledit au moins un orifice périphérique, et une position dite « fermée » dans laquelle le gaz chaud s'échappe vers l'extérieur de l'élément d'obturation au travers d'une ouverture d'évacuation formée dans la paroi de la portion creuse de l'élément d'obturation.

Plus particulièrement, l'obturateur mobile peut comporter :
- une première partie comprenant une première ouverture pour le passage de gaz chaud, la première partie étant solidaire d'un opercule,
- une deuxième partie comprenant une deuxième ouverture pour le passage de gaz chaud, débouchante sur une troisième ouverture formée dans la paroi de la deuxième partie,
les première et deuxième parties étant montées en coulissement l'une par rapport à l'autre de sorte à pouvoir occuper une première position permettant le passage de gaz chaud vers le tube pour former le bourrelet, dans laquelle l'opercule est en appui contre la paroi de la deuxième partie comprenant la troisième ouverture pour empêcher le passage de gaz chaud au travers de la troisième ouverture et dans laquelle les première et deuxième ouvertures sont au moins partiellement superposées pour permettre le passage de gaz chaud, et pouvoir occuper une deuxième position empêchant le passage de gaz chaud vers le tube en le dirigeant vers l'extérieur du tube, dans laquelle les première et deuxième ouvertures ne sont pas superposées entre elles et dans laquelle l'opercule ne ferme pas la troisième ouverture, le gaz chaud étant ainsi apte à circuler au travers de la deuxième ouverture puis de la troisième ouverture pour s'échapper vers l'extérieur.

Par ailleurs, l'invention a encore pour objet, selon un autre de ses aspects, un procédé de formation d'un bourrelet au niveau d'une extrémité libre d'un tube selon la revendication 9.

La température de soufflage du gaz chaud, notamment de l'air chaud, est avantageusement directement fonction du matériau à fondre, notamment du matériau polymère du tube à fondre. Par exemple, pour un tube en polypropylène, la température de soufflage est de l'ordre de 360°C pour faire fondre l'extrémité libre pour une source de gaz chaud située à environ une vingtaine de centimètres de l'extrémité libre afin d'obtenir le bourrelet par fusion.

Le soufflage de gaz chaud peut être effectué au moyen d'un dispositif de soufflage de gaz chaud adéquat, notamment un dispositif dont la température est régulée et ajustable, comme par exemple un pistolet à air chaud communément utilisé en plasturgie.

Le procédé est mis en œuvre en utilisant un dispositif de fixation selon la revendication 1.

En outre, le procédé peut comporter l'étape de mise en place de l'élément d'obturation dans le deuxième alésage de la pièce de fixation mâle avant le soufflage de gaz chaud de sorte à empêcher une entrée du gaz chaud dans le tube, puis l'étape d'enlèvement de l'élément d'obturation après formation du bourrelet.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
- la figure 1 illustre schématiquement, en coupe, un exemple d'échangeur de chaleur à tubes et calandre,
- la figure 2 illustre partiellement, en coupe, un exemple de principe de jonction entre des tubes minces et une plaque tubulaire d'un échangeur de chaleur à tubes et calandre,
- la figure 3 illustre partiellement, en coupe, un premier exemple de réalisation d'un dispositif de fixation utile à la compréhension de l'invention,
- la figure 4 illustre partiellement, en coupe, deux exemples de dispositifs de fixation semblables à celui de la figure 3, les tubes associés étant montés dans des ouvertures d'une plaque tubulaire d'un échangeur de chaleur,
- les figures 5 et 6 illustrent partiellement, en coupe, deux exemples de réalisation d'un dispositif de fixation conforme à l'invention, et
- les figures 7 et 8 illustrent partiellement, en vue de dessus, un exemple d'obturateur mobile pour un dispositif conforme à l'invention, respectivement en position permettant la fusion et en position d'attente.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 et 2 ont déjà été décrites précédemment dans la partie relative à l'état de la technique antérieure et au contexte technique de l'invention.

Il est par ailleurs à noter qu'un dispositif de fixation 10 conforme à l'invention permet la fixation de tubes minces 3, c'est-à-dire d'une épaisseur avantageusement comprise entre 40 et 200 µm, sur une plaque tubulaire 4, 5 telle que décrite précédemment d'un échangeur de chaleur 1, par exemple un évapo-condenseur ou un échangeur de chaleur gaz/gaz tels que décrits auparavant.

Ainsi, en référence aux figures 3 et 4, on a illustré partiellement, en coupe, un premier exemple de réalisation d'un dispositif de fixation 10, la figure 4 illustrant plus précisément deux exemples de tels dispositifs de fixation 10 avec les tubes 3 montés dans des ouvertures 12 d'une plaque tubulaire 4, 5 d'un échangeur de chaleur 1.

Ainsi, comme visible sur les figures 3 et 4, un tel dispositif de fixation 10 d'un tube 3 comporte tout d'abord une pièce de fixation femelle 6 (ou encore bague femelle), qui comprend un premier alésage 13 de forme tronconique. Cette pièce de fixation femelle 6 est insérée dans une ouverture 12 de la plaque tubulaire 4, 5, comme visible sur la figure 4.

De plus, le dispositif de fixation 10 comporte également une pièce de fixation mâle 7 (ou encore manchon mâle) de forme extérieure tronconique. Cette pièce de fixation mâle 7 est quant à elle insérée dans le premier alésage 13 de la pièce de fixation femelle 6 de sorte que le tube 3 soit maintenu, ou encore « pincé », entre la pièce de fixation femelle 6 et la pièce de fixation mâle 7.

Comme visible sur ces figures 3 et 4, le tube 3 est maintenu entre les deux pièces de fixation 6 et 7 de manière à ce qu'une extrémité libre 3a du tube 3 dépasse de la zone de maintien du tube 3.

Par ailleurs, la pièce de fixation mâle 7 comporte un deuxième alésage 14, et le dispositif de fixation 10 comporte en outre un élément d'obturation 11, sous la forme d'un bouchon 11, permettant de fermer le deuxième alésage 14 afin d'empêcher une entrée de gaz chaud, notamment de l'air chaud AC, dans le tube 3.

De façon avantageuse, cet air chaud AC permet la formation d'un bourrelet au niveau de l'extrémité libre 3a du tube 3.

En effet, ce procédé comporte l'étape de soufflage d'air chaud AC sur cette extrémité libre 3a du tube 3 de sorte à entraîner la fusion de celle-ci pour former le bourrelet.

La température de soufflage d'air chaud AC est directement fonction du matériau à fondre, notamment du matériau polymère du tube à fondre. A ce titre, le tube 3, et donc son extrémité libre 3a, peuvent avantageusement être réalisés en plastique, et donc en différents types de matériaux polymères.

Ainsi, par exemple, pour un tube 3 en polypropylène, la température de soufflage est de l'ordre de 360°C pour faire fondre l'extrémité libre 3a pour une source d'air chaud située à environ une vingtaine de centimètres de l'extrémité libre 3a afin d'obtenir le bourrelet par fusion.

Le soufflage peut être effectué au moyen d'un dispositif de soufflage adéquat, notamment un dispositif dont la température est régulée et ajustable, comme par exemple un pistolet à air chaud communément utilisé en plasturgie. L'extrémité libre 3a du tube 3 est alors fondue en déplaçant le dispositif de soufflage autour du tube.

Par ailleurs, la présence du bouchon 11 permet d'éviter au courant d'air chaud de pénétrer à l'intérieur du tube 3, ce qui aurait pour effet de détruire le tube 3 par fusion ou par déformation (effet thermo-rétractable) compte-tenu de sa très faible épaisseur et de son procédé de fabrication habituel. Aussi, lors de la formation du bourrelet, le procédé selon l'invention comporte d'abord l'étape de mise en place du bouchon 11 dans le deuxième alésage 14 de la pièce de fixation mâle 7 avant le soufflage d'air chaud AC, puis l'étape d'enlèvement du bouchon 11 après formation du bourrelet.

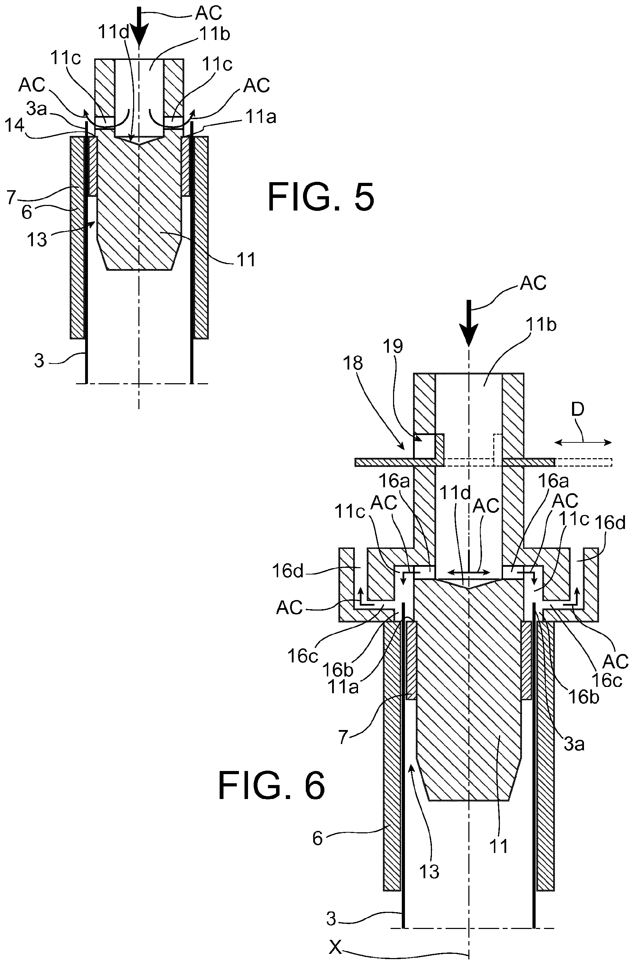

Par ailleurs, les figures 3 et 4, et cela est également valable pour les exemples des figures 5 et 6 décrits par la suite, illustrent le fait que le bouchon 11 comporte un épaulement 11a qui vient en appui contre la pièce de fixation mâle 7. Cet épaulement 11a équivaut ainsi à un élargissement du diamètre du bouchon 11 de forme cylindrique dans sa partie située au-dessus des pièces de fixation 6 et 7, hors du tube 3.

En outre, il faut noter que le ou les matériaux constitutifs du bouchon 11 présentent une température de fusion plus élevée que la température de fusion du ou des matériaux constitutifs du tube 3, ce qui permet de pouvoir faire fondre le tube 3, et plus précisément son extrémité libre 3a, pour former le bourrelet sans pour autant faire fondre le bouchon 11. De façon préférentielle, le bouchon 11 sera ainsi constitué par un polymère fluoré, notamment du polytétrafluoroéthylène (PTFE).

Les figures 5 et 6 illustrent désormais partiellement, en coupe, deux exemples de réalisation d'un dispositif de fixation 10 conforme à l'invention. Ces exemples de réalisation mettent en œuvre un outillage dédié spécifique au niveau du bouchon 11 de sorte à garantir la reproductibilité du résultat et à mieux maîtriser le procédé de formation du bourrelet. En particulier, le temps d'exposition au flux d'air chaud AC de la partie à fondre est un paramètre critique.

Pour ces deux exemples, le bouchon 11 comporte un évidement 11d en forme de V sur sa surface extérieure en dehors du tube 3. De plus, le bouchon 11 est partiellement creux. Plus précisément, il comporte, au-dessus de cet évidement 11d en forme de V, un orifice d'injection 11b d'air chaud AC. En outre, il comporte également des orifices périphériques 11c, ou encore des lumières périphériques, qui permettent le passage d'air chaud AC pour venir directement au contact de l'extrémité libre 3a du tube 3.

Le bouchon 11 comporte également une extrémité inférieure pour l'insertion dans le tube 3 qui présente une forme tronconique de sorte à faciliter la mise en place du bouchon 11.

De façon avantageuse, le passage de l'air chaud AC au travers de l'orifice d'injection 11b, puis au travers des orifices périphériques 11c, permet de faire fondre la matière de l'extrémité libre 3a du tube 3 et de former le bourrelet qui est repoussé vers l'extérieur sous l'effet de la vitesse de l'air chaud AC.

Plus précisément, en référence au deuxième exemple de réalisation de la figure 5, le bouchon 11 est partiellement creux au niveau de l'orifice d'injection 11b de sorte à recevoir le flux d'air chaud AC. Les orifices périphériques 11c laissent échapper l'air chaud AC qui vient directement au contact de l'extrémité libre 3a en dépassement du tube 3. La matière est ainsi fondue et le bourrelet est repoussé vers l'extérieur sous l'effet de la vitesse du gaz.

Par ailleurs, en référence à l'exemple de réalisation de la figure 6, les orifices périphériques 11c sont conçus différemment afin de mieux diriger le flux d'air chaud AC au contact du tube 3. Plus particulièrement, chaque orifice périphérique 11c comporte une première portion 16a s'étendant sensiblement perpendiculairement à l'axe longitudinal X du tube 3, puis une deuxième portion 16b s'étendant sensiblement parallèlement à l'axe longitudinal X du tube 3 dans laquelle s'étend l'extrémité libre 3a du tube 3 à chauffer pour former le bourrelet, puis une troisième portion 16c s'étendant sensiblement perpendiculairement à l'axe longitudinal X du tube 3, et enfin une quatrième portion 16d s'étendant sensiblement parallèlement à l'axe longitudinal X du tube 3.

Aussi, le flux d'air chaud AC est distribué perpendiculairement, au niveau de la première portion 16a, à l'extrémité libre 3a en dépassement du tube mince 3 de manière à repousser la matière dans le sens axial. Cette orientation permet de repousser la matière contre l'assemblage des pièces de fixation 6 et 7, ce qui a l'avantage de bloquer l'expulsion de la pièce de fixation mâle 7 vers l'extérieur et aussi de supprimer le risque d'amincissement du tube 3 mince lorsqu'il est repoussé vers l'extérieur. L'air chaud AC est ensuite dirigé vers l'extérieur selon une direction verticale afin de ne pas perturber les tubes 3 adjacents.

En outre, le bouchon 11 comporte, dans cet exemple de la figure 6 mais cela pourrait aussi être le cas pour l'exemple de la figure 5, dans sa portion creuse, un obturateur mobile coulissant 18 entre une position dite « ouverte » permettant le passage d'air chaud AC dans le bouchon 11 vers les orifices périphériques 11c, et une position dite « fermée » dans laquelle l'air chaud AC s'échappe vers l'extérieur du bouchon 11 au travers d'une ouverture d'évacuation 19 formée dans la paroi de la portion creuse du bouchon 11. La course totale D, visible sur la figure 6, de l'obturateur coulissant 18 peut être sensiblement égale au diamètre interne du bouchon 11 dans sa partie comprenant l'obturateur 18.

Autrement dit, l'obturateur coulissant 18 oriente l'air chaud AC vers le tube 3 mince ou vers l'extérieur. Il peut être combiné à une calibration du temps exact d'obtention du bourrelet permettant ainsi de garantir la reproductibilité de l'opération.

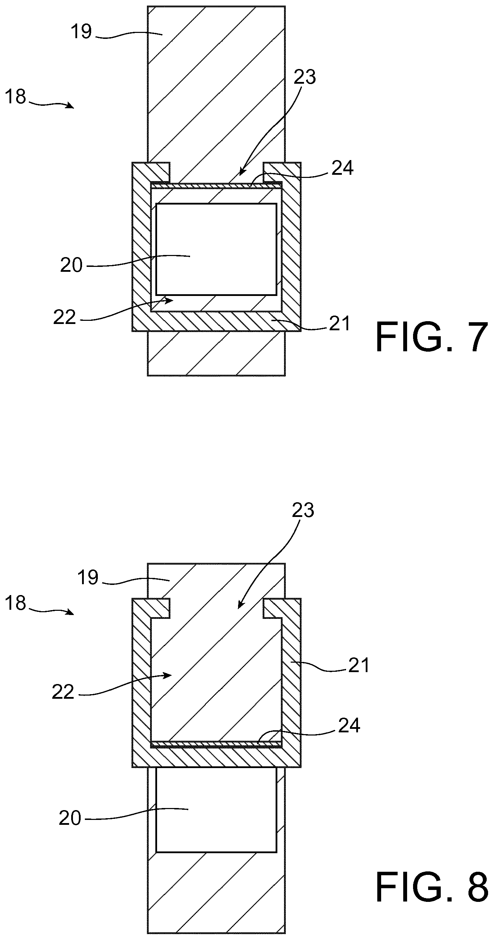

Les figures 7 et 8 illustrent partiellement, en vue de dessus, un exemple d'obturateur coulissant 18 pour un dispositif 10 conforme à l'invention, respectivement en position permettant la fusion et en position d'attente.

Ainsi, l'obturateur 18 comporte une première partie 19 comprenant une première ouverture 20 pour le passage d'air chaud AC. Cette première partie 19 est solidaire d'un opercule 24. De plus, l'obturateur 18 comporte une deuxième partie 21 comprenant une deuxième ouverture 22 pour le passage d'air chaud AC, débouchante sur une troisième ouverture 23 formée dans la paroi de la deuxième partie 21.

Les première 19 et deuxième 21 parties sont montées en coulissement l'une par rapport à l'autre de sorte à pouvoir occuper une première position permettant le passage d'air chaud AC vers le tube 3 pour former le bourrelet, comme visible sur la figure 7, dans laquelle l'opercule 24 est en appui contre la paroi de la deuxième partie 21 comprenant la troisième ouverture 23 pour empêcher le passage d'air chaud AC au travers de la troisième ouverture 23, les première 20 et deuxième 24 ouvertures étant au moins partiellement superposées pour permettre le passage de l'air chaud AC.

De plus, les première 19 et deuxième 21 parties sont montées en coulissement l'une par rapport à l'autre de sorte à pouvoir également occuper une deuxième position, comme visible sur la figure 8, empêchant le passage d'air chaud AC vers le tube 3 en le dirigeant vers l'extérieur du tube 3, les première 20 et deuxième 22 ouvertures n'étant pas superposées entre elles et l'opercule 24 ne fermant pas la troisième ouverture 23 de sorte que l'air chaud AC soit ainsi apte à circuler au travers de la deuxième ouverture 22 puis de la troisième ouverture 23 pour s'échapper vers l'extérieur.

Il est à noter que, pour en faciliter la réalisation, la section de la deuxième partie 21 est de forme carrée sur les figures 7 et 8. Toutefois, elle peut être d'une autre forme, par exemple circulaire, la forme de l'obturateur 18 pouvant être adaptée en fonction des besoins.

En conséquence, en position de fusion comme selon la figure 7, l'opercule 24 obture la troisième ouverture 23 et l'air chaud AC circule à travers la deuxième ouverture 22 pour être dirigé vers le tube 3 à fondre. En position d'attente comme selon la figure 8, la première partie 19 est tirée de manière à dégager la troisième ouverture 23 par laquelle l'air chaud AC s'échappe vers l'extérieur, son passage vers le tube 3 mince étant condamné.

## Revendications

1. Dispositif (10) de fixation d'un tube (3) sur une plaque tubulaire (4, 5) d'un échangeur de chaleur (1), comportant :
- une pièce de fixation femelle (6), comprenant un premier alésage (13) de forme tronconique, la pièce de fixation femelle (6) étant destinée à être insérée dans une ouverture (12) de la plaque tubulaire (4, 5),
- une pièce de fixation mâle (7) de forme extérieure tronconique, apte à être insérée dans le premier alésage (13) de la pièce de fixation femelle (6) de sorte que le tube (3) soit maintenu entre la pièce de fixation femelle (6) et la pièce de fixation mâle (7),
la pièce de fixation mâle (7) comportant un deuxième alésage (14), et le dispositif (10) comportant en outre un élément d'obturation (11) dudit deuxième alésage (14) afin d'empêcher une entrée d'un gaz chaud (AC) dans le tube (3), ledit gaz chaud (AC) permettant la formation d'un bourrelet au niveau d'une extrémité libre (3a) du tube (3), **caractérisé en ce que** l'élément d'obturation (11) est partiellement creux, comportant ainsi un orifice d'injection (11b) de gaz chaud (AC), et comportant au moins un orifice périphérique (11c) permettant le passage de gaz chaud (AC) pour venir directement au contact de l'extrémité libre (3a) du tube (3).

2. Dispositif selon la revendication 1, **caractérisé en ce que** l'élément d'obturation (11) comporte un épaulement (11a) apte à venir en appui contre la pièce de fixation mâle (7).

3. Dispositif selon la revendication 1 ou 2, **caractérisé en ce que** le ou les matériaux constitutifs de l'élément d'obturation (11) présentent une température de fusion plus élevée que la température de fusion du ou des matériaux constitutifs du tube (3).

4. Dispositif selon l'une des revendications précédentes, **caractérisé en ce que** l'élément d'obturation (11) comporte un polymère fluoré, notamment du polytétrafluoroéthylène (PTFE).

5. Dispositif selon l'une quelconque des revendications précédentes, **caractérisé en ce que** l'élément d'obturation (11) comporte une extrémité d'insertion dans le tube (3) de forme tronconique.

6. Dispositif selon l'une quelconque des revendications précédentes, **caractérisé en ce que** ledit au moins un orifice périphérique (11c) comporte :
- une première portion (16a) s'étendant sensiblement perpendiculairement à l'axe longitudinal (X) du tube (3),
- une deuxième portion (16b) s'étendant sensiblement parallèlement à l'axe longitudinal (X) du tube (3) dans laquelle s'étend l'extrémité libre (3a) du tube (3) à chauffer pour former le bourrelet,
- une troisième portion (16c) s'étendant sensiblement perpendiculairement à l'axe longitudinal (X) du tube (3), et
- une quatrième portion (16d) s'étendant sensiblement parallèlement à l'axe longitudinal (X) du tube (3).

7. Dispositif selon l'une quelconque des revendications précédentes, **caractérisé en ce que** l'élément d'obturation (11) comporte, dans sa portion creuse, un obturateur mobile (18), notamment un obturateur coulissant, entre une position dite « ouverte » permettant le passage de gaz chaud (AC) dans l'élément d'obturation (11) vers ledit au moins un orifice périphérique (11c), et une position dite « fermée » dans laquelle le gaz chaud (AC) s'échappe vers l'extérieur de l'élément d'obturation (11) au travers d'une ouverture d'évacuation (19) formée dans la paroi de la portion creuse de l'élément d'obturation (11).

8. Dispositif selon la revendication 7, **caractérisé en ce que** l'obturateur mobile (18) comporte :
- une première partie (19) comprenant une première ouverture (20) pour le passage de gaz chaud (AC), la première partie (19) étant solidaire d'un opercule (24),
- une deuxième partie (21) comprenant une deuxième ouverture (22) pour le passage de gaz chaud (AC), débouchante sur une troisième ouverture (23) formée dans la paroi de la deuxième partie (21),
les première (19) et deuxième (21) parties étant montées en coulissement l'une par rapport à l'autre de sorte à pouvoir occuper une première position permettant le passage de gaz chaud (AC) vers le tube (3) pour former le bourrelet, dans laquelle l'opercule (24) est en appui contre la paroi de la deuxième partie (21) comprenant la troisième ouverture (23) pour empêcher le passage de gaz chaud (AC) au travers de la troisième ouverture (23) et dans laquelle les première (20) et deuxième (22) ouvertures sont au moins partiellement superposées pour permettre le passage de gaz chaud (AC), et pouvoir occuper une deuxième position empêchant le passage de gaz chaud (AC) vers le tube (3) en le dirigeant vers l'extérieur du tube (3), dans laquelle les première (20) et deuxième (24) ouvertures ne sont pas superposées entre elles et dans laquelle l'opercule (24) ne ferme pas la troisième ouverture (23), le gaz chaud (AC) étant ainsi apte à circuler au travers de la deuxième ouverture (22) puis de la troisième ouverture (23) pour s'échapper vers l'extérieur.

9. Procédé de formation d'un bourrelet au niveau d'une extrémité libre (3a) d'un tube (3), le tube (3) étant fixé sur une plaque tubulaire (4, 5) d'un échangeur de chaleur (1) par le biais d'un dispositif (10) de fixation selon l'une quelconque des revendications précédentes, l'extrémité libre (3a) du tube (3) étant située hors de la portion du tube (3) maintenue entre la pièce de fixation femelle (6) et la pièce de fixation mâle (7),
le procédé comportant l'étape consistant à souffler un gaz chaud (AC), notamment de l'air chaud, sur ladite extrémité libre (3a) du tube (3) de sorte à entraîner la fusion de ladite extrémité libre (3a) pour former un bourrelet.

10. Procédé selon la revendication 9, **caractérisé en ce qu'**il comporte l'étape de mise en place de l'élément d'obturation (11) dans le deuxième alésage (14) de la pièce de fixation mâle (7) avant le soufflage de gaz chaud (AC) de sorte à empêcher une entrée du gaz chaud (AC) dans le tube (3), puis l'étape d'enlèvement de l'élément d'obturation (11) après formation du bourrelet.

## Patentansprüche

1. Vorrichtung (10) zum Befestigen eines Rohres (3) an einen Rohrboden (4, 5) eines Wärmetauschers (1), enthaltend:
- ein Befestigungsaufnahmeteil (6), das eine erste kegelstumpfförmige Bohrung (13) aufweist, wobei das Befestigungsaufnahmeteil (6) dazu bestimmt ist, in eine Öffnung (12) des Rohrbodens (4, 5) eingeführt zu werden,
- ein außen kegelstumpfförmiges Befestigungseinsteckteil (7), das dazu geeignet ist, in die erste Bohrung (13) des Befestigungsaufnahmeteils (6) eingeführt zu werden, so dass das Rohr (3) zwischen dem Befestigungsaufnahmeteil (6) und dem Befestigungseinsteckteil (7) gehalten wird,
wobei das Befestigungseinsteckteil (7) eine zweite Bohrung (14) aufweist und die Vorrichtung (10) ferner ein Verschlusselement (11) zum Verschließen der zweiten Bohrung (14) aufweist, um zu verhindern, dass heißes Gas (AC) in das Rohr (3) eintritt, wobei das heiße Gas (AC) die Bildung eines Wulstes an einem freien Ende (3a) des Rohres (3) ermöglicht,
**dadurch gekennzeichnet, dass**
das Verschlusselement (11) teilweise hohl ist und somit eine Einspritzöffnung (11b) zum Einspritzen von heißem Gas (AC) und zumindest eine umlaufende Öffnung (11c) aufweist, die den Durchtritt von heißem Gas (AC) ermöglicht, um direkt mit dem freien Ende (3a) des Rohrs (3) in Kontakt zu gelangen.

2. Vorrichtung nach Anspruch 1,
**dadurch gekennzeichnet, dass**
das Verschlusselement (11) eine Schulter (11a) aufweist, die dazu geeignet ist, mit dem Befestigungseinsteckteil (7) in Anlage zu gelangen.

3. Vorrichtung nach Anspruch 1 oder 2,
**dadurch gekennzeichnet, dass**
das bzw. die Materialien, aus dem bzw. denen das Verschlusselement (11) besteht, eine höhere Schmelztemperatur als die Schmelztemperatur des bzw. der Materialien aufweisen, aus dem bzw. denen das Rohr (3) besteht.

4. Vorrichtung nach einem der vorangehenden Ansprüche,
**dadurch gekennzeichnet, dass**
das Verschlusselement (11) ein Fluorpolymer, insbesondere Polytetrafluorethylen (PTFE), enthält.

5. Vorrichtung nach einem der vorangehenden Ansprüche,
**dadurch gekennzeichnet, dass**
das Verschlusselement (11) ein Einführende zum Einführen in das kegelstumpfförmige Rohr (3) aufweist.

6. Vorrichtung nach einem der vorangehenden Ansprüche,
**dadurch gekennzeichnet, dass**
die zumindest eine umlaufende Öffnung (11c) aufweist:
- einen ersten Abschnitt (16a), der sich im Wesentlichen senkrecht zur Längsachse (X) des Rohrs (3) erstreckt,
- einen zweiten Abschnitt (16b), der sich im Wesentlichen parallel zur Längsachse (X) des Rohrs (3) erstreckt und in welchem sich das freie Ende (3a) des Rohrs (3) erstreckt, das zum Bilden des Wulstes erhitzt werden soll,
- einen dritten Abschnitt (16c), der sich im Wesentlichen senkrecht zur Längsachse (X) des Rohres (3) erstreckt, und
- einen vierten Abschnitt (16d), der sich im Wesentlichen parallel zur Längsachse (X) des Rohres (3) erstreckt.

7. Vorrichtung nach einem der vorangehenden Ansprüche,
**dadurch gekennzeichnet, dass**
das Verschlusselement (11) in seinem hohlen Abschnitt einen beweglichen Verschluss (18), insbesondere einen verschiebbaren Verschluss, enthält, der zwischen einer "offenen" Stellung, in welcher der Durchtritt von heißem Gas (AC) in dem Verschlusselement (11) zu der zumindest einen umlaufenden Öffnung (11c) möglich ist, und einer "geschlossenen" Stellung beweglich ist, in welcher das heiße Gas (AC) vom Verschlusselement (11) durch eine Abführöffnung (19) nach außen entweicht, die in der Wandung des hohlen Abschnitts des Verschlusselements (11) ausgebildet ist.

8. Vorrichtung nach Anspruch 7,
**dadurch gekennzeichnet, dass**
der bewegliche Verschluss (18) enthält:
- ein erstes Teilstück (19), das eine erste Öffnung (20) zum Durchtritt von heißem Gas (AC) aufweist, wobei das erste Teilstück (19) fest mit einer Abdeckung (24) verbunden ist,
- ein zweites Teilstück (21), das eine zweite Öffnung (22) zum Durchtritt von heißem Gas (AC) aufweist, die in eine dritte Öffnung (23) mündet, die in der Wandung des zweiten Teilstücks (21) ausgebildet ist,
wobei das erste (19) und das zweite Teilstück (21) verschiebbar zueinander gelagert sind, so dass sie eine erste Stellung einnehmen können, die den Durchtritt von heißem Gas (AC) zum Rohr (3) gestattet, um den Wulst auszubilden, in welcher Stellung die Abdeckung (24) in Anlage an der Wandung des zweiten Teilstücks (21) ist, welche die dritte Öffnung (23) aufweist, um den Durchtritt von heißem Gas (AC) durch die dritte Öffnung (23) zu verhindern, und in welcher die erste (20) und die zweite Öffnung (22) zumindest teilweise übereinanderliegen, um den Durchtritt von heißem Gas (AC) zu gestatten, sowie eine zweite Stellung einnehmen können, welche den Durchtritt von heißem Gas (AC) zum Rohr (3) verhindert, indem es nach außerhalb des Rohrs (3) geleitet wird, in welcher Stellung die erste (20) und die zweite Öffnung (24) nicht übereinanderliegen und in welcher die Abdeckung (24) nicht die dritte Öffnung (23) verschließt, wobei das heiße Gas (AC) somit in der Lage ist, durch die zweite Öffnung (22) und dann durch die dritte Öffnung (23) hindurch zu strömen, um nach außen zu entweichen.

9. Verfahren zum Ausbilden eines Wulstes im Bereich von einem freien Ende (3a) eines Rohres (3), wobei das Rohr (3) an einen Rohrboden (4, 5) eines Wärmetauschers (1) über eine Befestigungsvorrichtung (10) nach einem der vorangehenden Ansprüche befestigt ist, wobei sich das freie Ende (3a) des Rohres (3) außerhalb des Abschnitts des Rohres (3) befindet, der zwischen dem Befestigungsaufnahmeteil (6) und dem Befestigungseinsteckteil (7) gehalten ist,
wobei das Verfahren den Schritt des Einblasens von einem heißen Gas (AC), insbesondere von heißer Luft, auf das freie Ende (3a) des Rohrs (3) umfasst, so dass das Schmelzen des freien Endes (3a) zum Ausbilden eines Wulstes hervorgerufen wird.

10. Verfahren nach Anspruch 9,
**dadurch gekennzeichnet, dass**
es den Schritt des Anordnens des Verschlusselements (11) in der zweiten Bohrung (14) des Befestigungseinsteckteils (7) vor dem Einblasen von heißem Gas (AC) umfasst, so dass ein Eintreten von heißem Gas (AC) in das Rohr (3) verhindert wird, sowie den Schritt des Entfernens des Verschlusselements (11) nach dem Ausbilden des Wulstes.

## Claims

1. A device (10) for attaching a pipe (3) to a pipe plate (4, 5) of a heat exchanger (1), comprising:
- a female attachment part (6), comprising a first bore (13) of frustoconical shape, the female attachment part (6) being intended to be inserted in an opening (12) in the pipe plate (4, 5),
- a male attachment part (7) with a frustoconical outer shape, which can be inserted into the first bore (13) of the female attachment part (6) so that the pipe (3) is held between the female attachment part (6) and the male attachment part (7),
the male attachment part (7) having a second bore (14), and the device (10) further having a sealing member (11) for said second bore (14) to prevent entry of a hot gas (AC) into the pipe (3), said hot gas (AC) allowing a bead to form at a free end (3a) of the pipe (3),
**characterized in that** the sealing member (11) is partially hollow, thus comprising an injection orifice (11b) for hot gas (AC), and comprising at least one peripheral orifice (11c) allowing the passage of hot gas (AC) to come directly into contact with the free end (3a) of the pipe (3).

2. The device as claimed in claim 1, **characterized in that** the sealing member (11) comprises a shoulder (11a) capable of coming into contact with the male attachment part (7).

3. The device as claimed in claim 1 or 2, **characterized in that** the material or materials constituting the sealing member (11) have a melting temperature higher than the melting temperature of the material or materials constituting the pipe (3).

4. The device as claimed in one of the preceding claims, **characterized in that** the sealing member (11) comprises a fluorinated polymer, in particular polytetrafluoroethylene (PTFE).

5. The device as claimed in any one of the preceding claims, **characterized in that** the sealing member (11) comprises a frustoconical end for insertion into the pipe (3).

6. The device as claimed in any one of the preceding claims, **characterized in that** said at least one peripheral orifice (11c) comprises:
- a first portion (16a) extending substantially perpendicular to the longitudinal axis (X) of the pipe (3),
- a second portion (16b) extending substantially parallel to the longitudinal axis (X) of the pipe (3) in which the free end (3a) of the pipe (3) to be heated extends to form the bead,
- a third portion (16c) extending substantially perpendicular to the longitudinal axis (X) of the pipe (3), and
- a fourth portion (16d) extending substantially parallel to the longitudinal axis (X) of the pipe (3).

7. The device as claimed in any one of the preceding claims, **characterized in that** the sealing member (11) comprises, in its hollow portion, a movable obturator (18), in particular a sliding obturator, between an "open" position allowing the passage of hot gas (AC) in the sealing member (11) towards said at least one peripheral orifice (11c), and a "closed" position in which the hot gas (AC) escapes to the outside of the sealing member (11) through an exhaust opening (19) formed in the wall of the hollow portion of the sealing member (11).

8. The device as claimed in claim 7, **characterized in that** the movable obturator (18) comprises:
- a first part (19) comprising a first opening (20) for the passage of hot gas (AC), the first part (19) being integral with a cap (24),
- a second part (21) comprising a second opening (22) for the passage of hot gas (AC), opening out into a third opening (23) formed in the wall of the second part (21),
the first (19) and second (21) parts being mounted so as to slide relative to each other so as to be able to occupy a first position allowing the passage of hot gas (AC) towards the pipe (3) to form the bead, in which the cap (24) bears against the wall of the second part (21) comprising the third opening (23) to prevent the passage of hot gas (AC) through the third opening (23) and in which the first (20) and second (22) openings are at least partially superimposed to allow the passage of hot gas (AC), and being able to occupy a second position preventing the passage of hot gas (AC) towards the pipe (3) by directing it towards the outside of the pipe (3), in which the first (20) and second (24) openings are not superimposed on each other and in which the cap (24) does not close the third opening (23), the hot gas (AC) thus being able to flow through the second opening (22) and then the third opening (23) to escape to the outside.

9. A process for forming a bead at a free end (3a) of a pipe (3), the pipe (3) being attached to a pipe plate (4, 5) of a heat exchanger (1) by means of a attachment device (10) as claimed in any one of the preceding claims, the free end (3a) of the pipe (3) being located outside the portion of the pipe (3) held between the female attachment part (6) and the male attachment part (7),
the process comprising the step of blowing a hot gas (AC), in particular hot air, onto said free end (3a) of the pipe (3) so as to cause said free end (3a) to melt to form a bead.

10. The process as claimed in claim 9, **characterized in that** it comprises the step of installing the sealing member (11) in the second bore (14) of the male attachment part (7) before blowing hot gas (AC) so as to prevent the hot gas (AC) from entering the pipe (3), then the step of removing the sealing member (11) after formation of the bead.
